Europäisches Patentamt

**European Patent Office**

**Office européen des brevets**

(19)

(11) Publication number: **0 168 538**
**A1**

# EUROPEAN PATENT APPLICATION

(21) Application number: **84308353.6**

(22) Date of filing: **30.11.84**

(51) Int. Cl.⁴: **B 01 D 21/02, C 02 F 1/00**

(30) Priority: **30.11.83 GB 8332007**

(43) Date of publication of application: **22.01.86**
**Bulletin 86/4**

(84) Designated Contracting States: **AT BE CH DE FR IT LI**
**LU NL SE**

(71) Applicant: **BLUE CIRCLE INDUSTRIES PLC, Portland**
**House Stag Place, London SW1E 5BJ (GB)**

(72) Inventor: **Smith, David Ernest, 61 Shearwater, New Barn**
**Kent (GB)**
Inventor: **Earp, George Ronald, 7 Goldfinch View The**
**Burnt Wood, Loggerheads Market Drayton Shropshire**
**(GB)**

(74) Representative: **Grundy, Derek George Ritchie et al,**
**CARPMAELS & RANSFORD 43, Bloomsbury Square,**
**London WC1A 2RA (GB)**

(54) **Clarifier.**

(57) A clarifier for removing particulate matter from a liquid comprises a chamber (1) defined by a cylindrical wall (2) having a top-plate (8) and a funnel-shaped floor (3), the latter terminating in a cylindrical receptacle (5) equipped with an outlet pipe (7). The liquid to be clarified is introduced into the chamber through an inlet (34) arranged to direct the liquid into an annular space formed between the chamber wall and a flow pattern-controlling device, typically in the form of a hollow, truncated cone (21). The flow pattern may be modified by a further hollow truncated cone (25). Clarified liquid passing up through the truncated cones is discharged through the aperture defined by a cylindrical member (9) set in the top-plate, the liquid passing into a trough (11) and thence to a collection box 13 for discharge through a pipe (14). Scum and other floatable solids are collected in a box 18 for discharge through a pipe (20). A floc blanket may be established within the chamber as an aid to clarification. A flocculating agent may be introduced into the chamber along with the liquid.

## CLARIFIER

### Field of the Invention

The present invention relates to a clarifier, especially to a clarifier that is suitable for the separation of solid matter from a liquid. The clarifier may be used, for example, to remove particulate solids from the water in sewage or other aqueous wastes.

### Background to the Invention

Raw sewage is commonly treated in three distinct stages. Firstly, particulate solid matter is allowed to settle from the bulk of the wastewater in a primary sedimentation stage. Secondly, the resultant wastewater is subjected to a biological treatment wherein it is purified by a combination of processes including degradation, flocculation and adsorption. Thirdly, the solids produced during the biological treatment are settled from the bulk of the water in a final sedimentation stage.

Conventionally, the primary sedimentation has been effected in settling tanks. However, the conventional settling tanks are comparatively inefficient, in that they must cover a large surface area in order to permit the treatment of large volumes of sewage.

A separating apparatus that may be used in the treatment of primary sewage is described in GB-A-2,082,941. This apparatus comprises a hopper-bottomed, cylindrical vessel having an outlet for settled sludge at its base and an outlet for clarified water at its top. An inlet is provided through which the raw sewage is fed tangentially into the vessel so as to promote a circulating flow or swirl about the vertical axis of the vessel, permitting solid matter to settle out under the effect of gravity and of drag forces at the wall and bottom surfaces of the vessel. The settled solids are discharged through the sludge outlet. The main circulating flow is said to separate into an outer, fast flow and an inner, slower flow, a shear zone between the two flow paths being created or stabilised by a cylindrical dip-plate projecting into the vessel from the top. A trap is provided to permit the removal of floatable material that gathers at the top of the vessel between the vessel wall and the dip-plate. Adjacent to, but spaced from, the bottom of the vessel is a flow-modifying device in the form of a cone arranged with its apex uppermost, the cone having a vertical passage extending from its base to its apex. The cone has the effect of creating a secondary flow path in which liquid flows radially inwards along the bottom of the vessel, passes upwards through the passage in the cone and then flows downwards over the outer surface of the cone towards the bottom again.

In "Effluent and Water Treatment Journal", May 1980, pages 222-224, R. Irwin, B.A. Winfield and P.A. Stead describe a process for clarifying secondary sewage (i.e. the wastewater obtained from the biological treatment referred to above) involving the use of lime as a coagulant in conjunction with an upward-flow, hopper-bottomed clarification tank similar to those employed in the treatment of potable water. The secondary sewage is dosed with lime and then passed down a pipe centrally located within the clarifier tank to a point near the bottom of the tank. The liquid moves upwards from this point with a turbulent action that allows the coagulation of particulate matter therein. A floc blanket (also referred to as a "sludge blanket") forms within the tank, which blanket acts as a filter by trapping suspended particles and _____

absorbing soluble and colloidal material. The water passing upwards through the blanket is thereby clarified and is subsequently drawn off at the top of the tank.

Summary of the Invention

The present invention now provides a clarifier comprising a chamber having an inlet, a first outlet and a second outlet that is spaced from the first outlet in the general direction of the central axis of the chamber, a flow pattern-controlling device being provided within the chamber, characterised in that the said flow pattern-controlling device has a passage therethrough that is substantially aligned with the central axis of the chamber, the flow pattern-controlling device further having an outer surface that defines, together with part of the wall of the chamber, an annular space communicating both with the said passage through the flow pattern-controlling device and with the first outlet, the said inlet being arranged to direct influent material into the said annular space.

Normally, the first outlet will be at one axial end of the chamber and the second outlet will be at the other end. Preferably, the clarifier will be arranged with its central axis substantially vertical, with the first outlet disposed at the bottom of the chamber and the second outlet disposed at the top. In this arrangement, the first outlet is an outlet for settled solids (which commonly will still be associated with sufficient liquid to form a sludge) whereas the second outlet will be for the clarified liquid.

In order to adjust the flow pattern within the chamber, a flow pattern-modifying device may be provided, at least part of which is preferably within the said passage through the aforesaid flow pattern-controlling device. Preferably, the flow pattern-modifying device projects beyond the passage in the flow pattern-controlling device and towards the end at which the first outlet is located.  The preferred form of both the said controlling device and the optional, modifying device is a hollow, truncated cone.

Brief Description of the Drawings

Figure 1 is a vertical section through an exemplary clarifier according to this invention (the supporting structure for the flow pattern-controlling and modifying devices having been omitted for the sake of clarity).

Figure 2 is a top view of part of the clarifier of Figure 1, showing the discharge means for clarified liquid.

Figure 3 is a top view of another part of the clarifier of Figure 1, showing the discharge means for scum and floatable solids.

Figure 4 is a vertical section through the flow pattern-controlling and modifying devices used in the clarifier of Figure 1, showing the structure by means of which the said devices are supported within the clarifier chamber.

Figure 5 is a side view of the inlet of the clarifier of Figure 1, as seen from within the chamber thereof.

Figure 6 is a sketch, in vertical section, of a further exemplary clarifier according to this invention.

Figure 7 is a sketch, in vertical section, of another exemplary clarifier according to this invention.

Figure 8 is a sketch, in vertical section, of yet another exemplary clarifier according to this invention.

In the drawings, like parts are indicated by like numerals.

Description of Preferred Embodiments

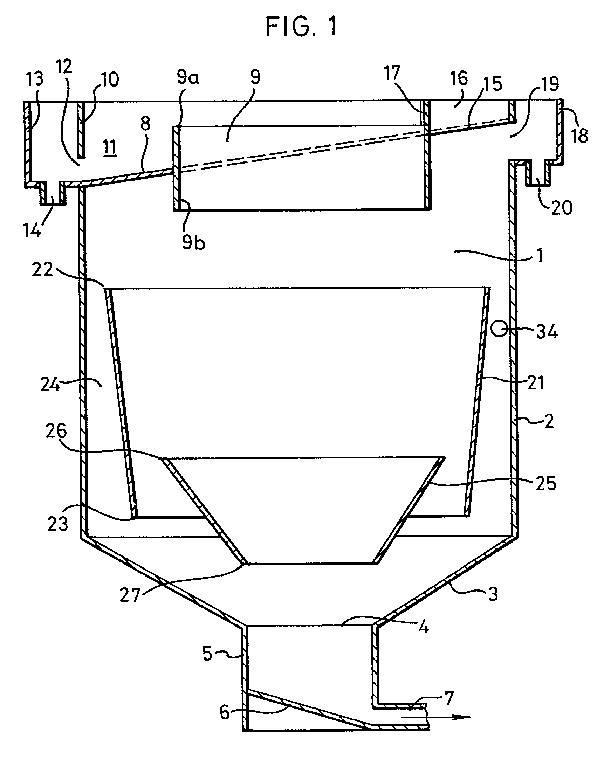

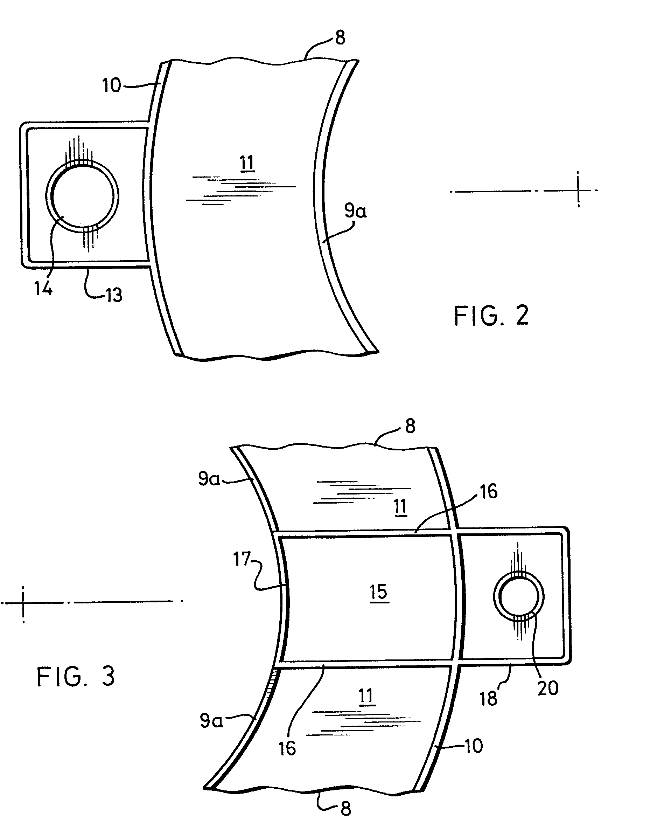

The clarifier shown in Figures 1 to 5 comprises a chamber 1 defined in part by a substantially cylindrical wall 2 of circular cross-section, arranged so that its longitudinal axis is substantially vertical. The bottom of the chamber is funnel-shaped and comprises a frustoconical floor 3 that slopes down to a central aperture 4 by means of which the chamber 1 communicates with a cylindrical receptacle 5.

The base 6 of the cylindrical receptacle 5 is slanted. Adjacent the lower part of the base 6 the receptacle 5 is provided with a pipe 7 through which the contents of the receptacle 5 may be withdrawn. The pipe 7 may be provided with a shut-off valve (not shown).

The chamber 1 is provided with a sloping top-plate 8, in which a hollow, upright cylinder 9 is set, the cylinder 9 having a circular cross-section. The portion 9a of the cylinder 9 extending above the top-plate 8 forms a weir, whereas the portion 9b depending from the top-plate 8 constitutes an annular dip-plate or dip-tube extending into the interior of the chamber 1.

The upper part 10 of the wall 2 extends above the top-plate 8 and defines, together with the upper surface of the top-plate 8, a trough 11 for the collection of liquid flowing from the chamber 1 and over the rim of the weir 9a. At the lowermost part of the top-plate 8, the wall 10 is provided with a slot 12 that opens into an effluent-collection box 13 from which liquid may be removed by means of a discharge pipe 14.

A generally rectangular slot 15 is provided in the uppermost part of the top-plate 8 (i.e. that part which is diametrically opposite the effluent-collection box 13). The slot 15 is sealed off from the trough 11 by means of sidewalls 16 and an extension plate 17 mounted on the upper rim of the cylinder 9. Against the wall 10 and adjacent the slot 15, there is provided a scum-collection box 18 which communicates via a slot 19 with the annular space between the chamber wall 2 and the dip-plate 9b. Matter collecting in the box 18 may be withdrawn through the pipe 20 which may be provided with a valve (not shown).

Within the chamber 1 there is provided a flow pattern-controlling device 21 in the form of a frustum of a hollow, right cone arranged so that it tapers in the downward direction. Thus, the radial distance between the upper rim 22 of the truncated cone 21 and the chamber wall 2 is less than radial distance between the lower rim 23 of the truncated cone 21 and the chamber wall 2. This means that the annular space 24 defined by the outer surface of the truncated cone 21 and the adjacent part of the chamber wall 2 increases in cross-sectional area in the direction toward the bottom of the chamber.

The lower rim 23 of the truncated cone 21 is spaced from the floor 3 of the chamber 1. Thus, the aforesaid annular space 24 communicates both with the cylindrical receptacle 5 and its associated outlet pipe 7 and with the passage defined by the inner surface of the hollow truncated cone 21, which passage is aligned with the central axis of the chamber 1.

A flow pattern-modifying device 25 is also provided, this being in the form of a frustum of a hollow, right cone tapering in the downward direction, the broader part (which terminates at the upper rim 26) being located within the truncated cone 21 and the narrower portion (which terminates at the lower rim 27) projecting beyond the lower rim 23 of the truncated cone 21. The two truncated cones 21 and 25 are disposed centrally; in other words, their longitudinal axes are coincident with the longitudinal axes of the chamber wall 2, the cylindrical receptacle 5 and the cylinder 9 in the top-plate 8.

The angle of the truncated cones 21 and 25 can be selected from a wide range in each case, although the apex angle of cone 25 is preferably larger than that of cone 21. Usually, the device 21 will have an apex angle of from 1 to 60°, preferably from 10 to 30°, e.g. 20°, whereas the device 25 usually has an apex angle of from 1 to 120°, preferably from 20 to 80°, e.g. 60°.

The radial distance between the upper rim 22 of the larger truncated cone 21 and the chamber wall 2 should be narrow enough to assist in directing the flow of influent material downwards but large enough not to cause the accumulation of scum and the like at the top of the annular space 24.

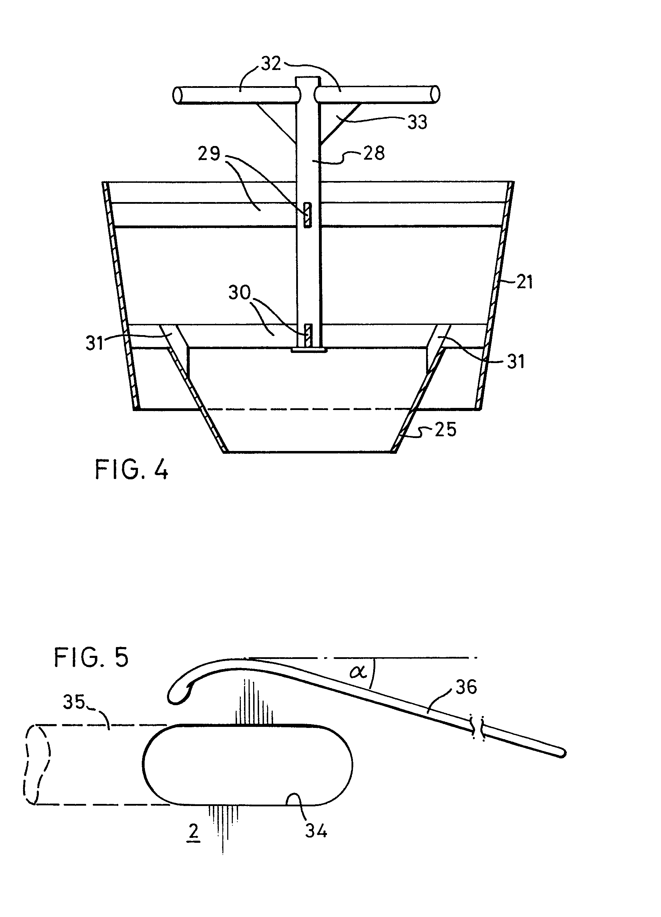

The structure supporting the truncated cones 21 and 25 within the chamber 1 has been omitted, for the sake of clarity, from Figure 1, but is shown in Figure 4. The supporting structure comprises a central shaft 28 to which the larger truncated cone 21 is attached by an upper set of four stays 29 and a lower set of four stays 30, the stays in each set being disposed perpendicularly to the shaft 28 at intervals of 90° around the said shaft 28. Each of the lower stays 30 is provided with a cleat 31, to which cleat the lower truncated cone 25 is attached with bolts (not shown) or the like.

Three tubular stays 32 (of which only two are visible in Figure 4) extend perpendicularly from the centre shaft 28 near the upper end thereof, the tubular stays 32 being arranged at intervals of 120°. Each tubular stay 32 is buttressed by a respective gusset plate 33, as shown. The stays 29 and 30 may be attached to the central shaft 28 and the larger truncated cone 21 by welding, which is also a preferred manner of attaching the cleats 31 to the stays 30, the tubular stays 32 to the central shaft 28 and the gusset plates 33 to both the central shaft 28 and the tubular stays 32.

The tubular stays are so dimensioned that they may be received within the cylinder 9 in the top-plate 8, where they may be held in place by any suitable means (not shown).

An inlet aperture 34 is provided in the chamber wall 2 at a point below the upper rim 22 of the larger truncated cone 21. The inlet aperture 34 is supplied by an inlet·pipe 35 indicated by dotted lines in Figure 5 and is arranged to introduce matter into the chamber 1 in an initial direction that is substantially tangential to the curved wall 2 of the chamber 1. Extending into the chamber from the inner surface of wall 2 is a deflector plate 36 which is disposed above and in advance of the inlet 34, as shown in Figure 5, the purpose of which deflector plate is to impart a downward component to the motion of the influent material from inlet 34. The plate 36 is, for the most part, planar and is set at an acute angle $\alpha$ to the horizontal of, in general, up to 20°, preferably from 10 to 15°. The uppermost part of the plate may be curved, since this has been found to reduce the accumulation of particulate matter on the deflector plate 36. It will be understood, of course, that the inlet pipe 35 may also be disposed at an acute angle to the horizontal in order to impart a downward component to the flow of the influent material. It is preferred that the inlet pipe 35 should not protrude into the inlet chamber, as such a protruding pipe would disrupt the flow-pattern within the chamber and would also present surfaces upon which particulate matter might accumulate and build up deposits.

The trough 11, the effluent collection box 13 and the scum collection box 18, as shown in Figure 1, are open at the top. However, the said trough and boxes may be closed by means of a cover plate, if desired.

The clarifier and the internal devices may be fabricated from any material of appropriate rigidity and corrosion resistance: a metal such as stainless steel is particularly preferred.

The operation of the clarifier illustrated in Figure 1 will now be described, by way of example, in connection with the treatment of sewage.

Screened raw sewage (an aqueous suspension of particulate mineral and organic matter) is continuously injected, as by pumping, into the separator chamber 1 through the inlet 34. After deflection by the plate 36, the aqueous suspension will swirl downwards in a helical flow path in the annular space 24 between the chamber wall 2 and the outer surface of the truncated cone 21 that constitutes the flow pattern-controlling means; this will assist flocculation and coagulation of suspended matter by promoting contact between the particles and by providing sufficient residence time for the process to take place. Owing to the increasing width of the annulus in the downward direction, the velocity of the flowing aqueous suspension will be reduced, which assists the settling of the solid particulate matter from the influent suspension. The suspension will flow past the lower rim 23 of the truncated cone 21, whereupon a portion will flow inwards down the floor 3 of the chamber 1, the remainder flowing upwards into the interior of the truncated cone 21 through the slot defined by the said rim 23 and the outer surface of the smaller truncated cone 25 and through the aperture defined by the lower rim 27 of the smaller truncated cone 25.

Solid matter settling out of suspension will thicken to form a sludge, which sludge will collect in the cylindrical receptacle 5, from which it may be withdrawn through pipe 7.

The aqueous liquid above the sludge collection zone will tend to flow upwards through the aperture defined by the lowermost rim 27 of the smaller truncated cone 25. It is preferred that the diameter of the said aperture should be substantially equal to or less than that of the aperture 4 forming the mouth of the cylindrical receptacle 5.

It will be understood that the aqueous liquid flowing upwards through the passage in the larger truncated cone 21 will still contain flocs and other particulate matter in suspension, some of which matter will coagulate within the said passage to form further flocs. It is desirable for the formation of a floc blanket to be encouraged with coagulable matter, e.g. by adjusting the velocity of the throughput and establishing an even upward velocity by the use of a lower cone 25 of appropriate size and dimensions. The flocculated matter that settles will be directed into the cylindrical receptacle 5 by the smaller truncated cone 25 and by the incoming sewage.

The smaller truncated cone 25 also serves to modify the upward flow of liquid by helping to apportion the flow evenly across the cross-section of the larger truncated cone 21 and by inhibiting the formation of "dead spots" and regions of localised high-velocity flow. The upwardly flowing liquid follows the inner surface of the larger truncated cone 21 and therefore has a radially outward component to its motion. Subsequently, upon leaving the passage defined by the larger truncated cone 21, a radially inward component is imparted to the flow of the rising liquid as it streams towards the outlet defined by the cylinder 9 in the top-plate 8. However, the buoyancy of floatable solids entrained in the liquid will, in effect, impart an additional vertical component to the forces on such solids and they will tend to rise into the annular space between the dip-plate 9b and the chamber wall 2. Floatable material may also pass through the annular "slot" formed by the upper rim 22 and the wall 2 of the chamber. The floatable solids will then be trapped under the top-plate 8 to form a scum which will flow through the slot 19 and into the scum-collection box 18 from which it may be removed via the discharge pipe 20. The clarified liquid flowing into the cylinder 9 will pass over the weir 9a into the trough 11 and thence through the slot 12 into the effluent collection box 13 from which it may be discharged through the pipe 14.

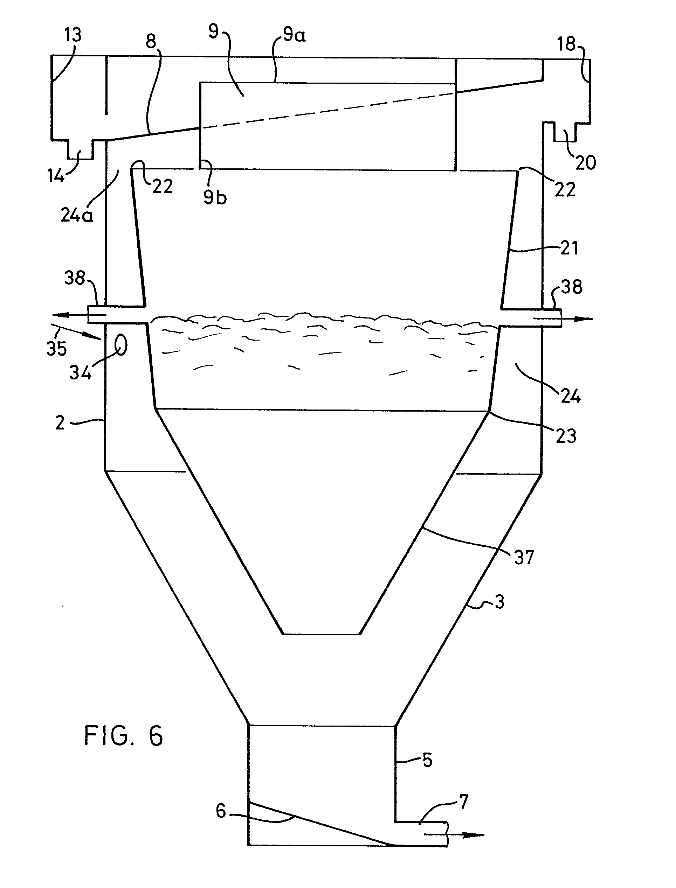

It is possible, under appropriate conditions, that a floc blanket may form within the chamber 1, for example in a zone above the upper rim 22 of the larger truncated cone 21 or even within that truncated cone itself. It may be appropriate, therefore, to provide means (e.g. as shown in Figures 6-8) for drawing off material from the floc blanket, the material drawn off being conveniently added to the sludge withdrawn through pipe 7 from the receptacle 5. A photoelectric device or other means (not shown) may be provided to sense the level of the floc blanket so that the blanket sludge may be withdrawn before it reaches a predetermined maximum.

To assist the flocculation of the particulate solid matter, a flocculating or coagulating agent may be added to the raw sewage before it enters the clarifier. Thus, prior to entry into the clarifier, the sewage may be passed into a tank in order to increase the contact time between the sewage and the flocculant. Alternatively, the flocculant may be introduced into the clarifier through an auxiliary inlet (not shown). Suitable flocculating or coagulating agents include conventional organic flocculants and inorganic flocculants, e.g. lime, and mixtures of lime and calcium carbonate, as well as the compositions disclosed in British Patent Specifications No. 2,095,226A and No. 2,127,395A

It will be understood, of course, that the precise flow pattern within a clarifier according to the present invention will depend upon the size, shape and disposition of the component parts of the clarifier and of the nature and flow rate of the influent material. As a guide, it has been found that the length of the larger cone 21 (measured vertically from rim 22 to rim 23) should be at least 25% and preferably at least 50% of the long dimension of the chamber (measured from the lowermost part of the top-plate 8 to the periphery of the sloping floor 3). The inlet 34 is, in general, situated between the level of the upper rim 22 of the larger truncated cone 21 and the level of the lower rim 23 thereof and is preferably situated midway between those levels, or lower. It is, in general, appropriate for the lowermost rim 27 of the smaller truncated cone 25 to be lower than the lowermost rim 23 of the larger truncated cone 21; in the embodiment illustrated in Figure 1, the smaller truncated cone projects beyond the larger truncated cone by a distance approximately half of the vertical height of the smaller truncated cone. However, the extent of the projection may be varied and it is, in principle, possible to position the smaller truncated cone entirely below the rim 23 of the larger truncated cone 21.

Although it is preferred that the annular space 24 between the flow pattern-controlling device and the chamber wall should increase in the direction towards the first outlet (i.e. the outlet for sludge or other settled solids), such an arrangement may be achieved by means other than those shown in Figure 1. For example, it is possible to construct the flow pattern-controlling device as a hollow, right cylinder, at least that part of the chamber wall that is adjacent the cylinder being such that its cross-sectional area increases in the direction towards the said first outlet.

An alternative form of the clarifier according to the present invention is sketched in Figure 6. The major changes from the construction shown in Figure 1 are that the upper rim 22 of the flow pattern-controlling device 21 is substantially level with the lower rim of the dip-plate 9b, and that the flow-pattern-modifying device is constituted by an extension to the flow pattern-controlling device in the form of a lower frustoconical member 37 joined to device 21 at the lower rim 23 thereof.

The embodiment of Figure 6 is constructed with a steep floor 3; preferably, the frustoconical extension 37 and the frustoconical floor section 3 have substantially equal apex angles, a preferred value being 60°.

The flow pattern-controlling device 21 is preferably provided with one or more pipes 38 for the withdrawal of material from any sludge blanket forming within the device 21 during operation; such pipes may extend into the sludge-blanket section, and there terminate in upwardly open funnels (not shown) for the reception of sludge for removal. Floatable material introduced through inlet 34 may escape from the annular space 24a via the slot defined by the rim 22 and the chamber wall 2, whereupon it rises to form a scum under the top-plate 8. The means for collecting and removing the settled solids, the scum and the clarified effluent are substantially as described with reference to Figure 1.

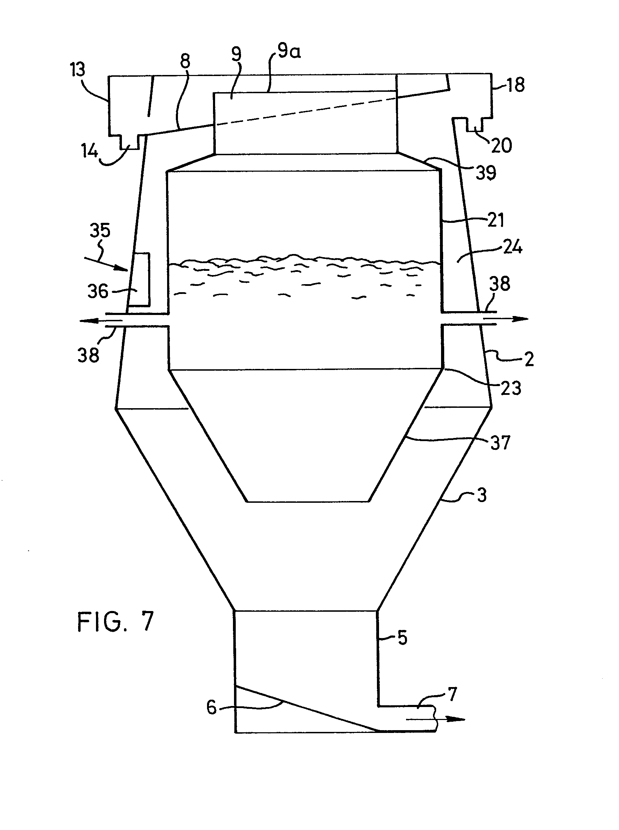

The embodiment of the present invention that is sketched in Figure 7 is similar to that shown in Figure 6, but comprises the further modification that the flow pattern-controlling device 21 is joined to the outlet cylinder 9 by an annular connecting element 39. This arrangement prevents the liquid that rises from the annular space 24 from mixing with the liquid flowing upwards through the flow pattern-controlling device 21, thereby preventing contamination of the clarified effluent with particles of scum and light or small particles which may be flocculated.

A further modification incorporated into the clarifier of Figure 7 is that the flow pattern-controlling device 21 is formed as a hollow cylinder (apart from the lower, frustoconical extension 37), the chamber wall 2 being constructed as a truncated cone which broadens in the downward direction, thereby defining an annular space 24 that has an increasing cross-sectional area in the downward direction. The said hollow cylinder 21 assists in stabilizing a floc blanket that may be formed therein.

As in the case of the clarifier of Figure 6, this embodiment, too, is provided with means 38 for drawing off sludge from the sludge blanket formed during operation within the flow pattern-controlling device 21. The means for collecting and discharging the settled solids, the scum and the clarified effluent are substantially as described with reference to Figure 1.

The clarifiers shown in Figures 6 and 7 and similar embodiments of the present invention offer certain advantages over the known upward-flow sludge-blanket clarifiers used for potable water treatment.

(a) The sludge blanket section is separated from the shell of the clarifier by an annular space and is therefore protected from changes in temperature (due, for example, to sunshine) that could upset the blanket by causing convection currents.

(b) Grit, gross solids and heavy sludge are trapped before they can enter the sludge blanket section of the unit. This avoids the formation of a bed of heavy sludge in the base of the section containing the sludge blanket, which heavy sludge would cause uneven flow with channelling, resulting in localized high velocities and disturbance of the sludge blanket.

(c) Scum and other floatable material are removed from the sewage before the latter enters the sludge blanket section.

(d) The spiral flow induced in the annular space 24 helps to improve flocculation by the pelleting flocculation mechanism without resort to mechanical means and thereby offers an improvement over the method of Ide and Kataoka (Filtration and Separation, March-April 1980). Mechanical agitators are liable to choke up due to the collection of rags and the like.

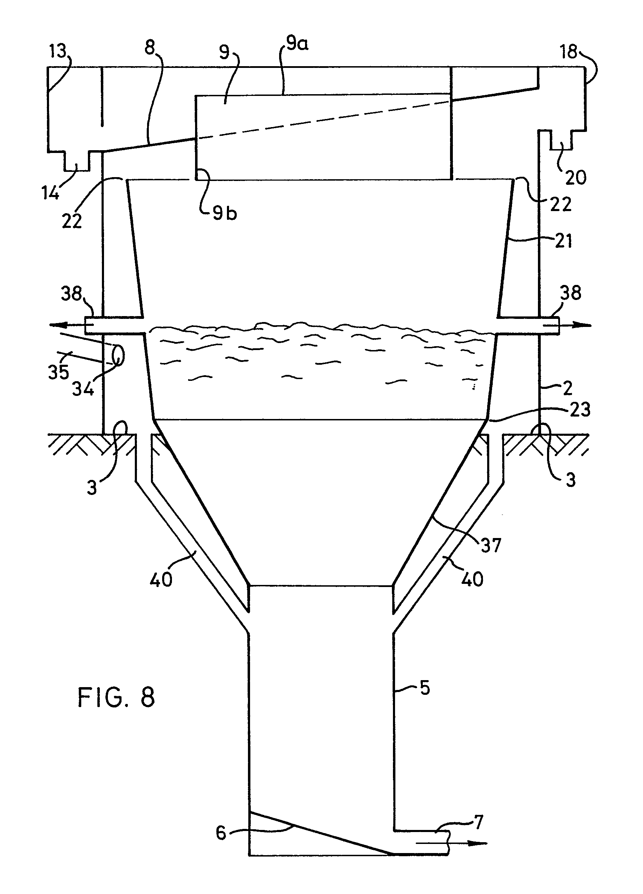

The clarifier shown in Figure 8 is a modification of that shown in Figure 6, wherein the chamber wall 2 terminates in a horizontal floor 3 just below the level at which the flow pattern-controlling device 21 is joined to the lower frustoconical member 37. The annular space between the flow pattern-controlling device 21 and the chamber wall 2 communicates with the interior of the cylindrical receptacle 5 (and thus with the passage through the flow pattern-controlling device 21 and with the outlet pipe 7) by means of two or more pipes 40. As indicated in Figure 8, the clarifier may be set in the ground, conveniently with the floor 3 of the chamber being at ground level.

Alternative constructions of the clarifier to those illustrated in the drawings are, of course, possible. For example, the outer wall 2 could be such as to define an egg-shaped chamber. Furthermore, there may be two or more inlets arranged to direct influent material into the annular space between the chamber wall and the flow pattern-controlling device. Two such inlets could, for example, be located diametrically opposite to each other, although they should of course, direct the influent material in similar directions.

The embodiments of Figures 6, 7 and 8 could be modified by constructing the lower cone 37 so that it is separate from the device 21.

Other forms of outlet for the clarified effluent and for the scum and floatable solids may be employed. For example, the collection boxes 13, 18 may be replaced by outlet pipes communicating respectively with the trough 11 and the chamber 1 via an aperture in the wall 10 or 2 (said apertures replacing the slots 12, 19).

It would also be possible to provide a scraping device to assist in the removal of sludge from the bottom of the clarifier. However, it is an advantage of the illustrated embodiments that they have no moving parts.

Although the invention has been described above in connection with the treatment of sewage, the clarifier can be used for many other purposes, for example the concentration of aqueous slurries of particulate matter, the removal of grit or the like from wastewater or the treatment of industrial wastewaters containing solid particulate matter.

The present invention is illustrated in and by the following specific Examples.

Example 1

A pilot-scale clarifier was constructed as shown in Figure 1 using 5 mm mild steel plate for the chamber wall 2, the chamber floor 3, the cylindrical receptacle 5 and its base 6, the top-plate 8, the outlet cylinder 9 and the collection boxes 13 and 18. The truncated cones 21 and 25 were fabricated from 12 SWG mild steel sheet. The stays 29 and 30 were formed from metal strips having a cross section of 50 mm x 4 mm; the central support shaft 28 was formed from a steel tube having an outside diameter of 48 mm; the tubular stays 32 were also of steel and had an outside diameter of 25.4 mm; and the gusset plates 33 were of 4 mm thick steel.

0168538

The major dimensions of the clarifier components were as follows:

diameter of the clarifier chamber 1 - 1 metre;

height of the chamber (from the top of the extension wall 10 to the periphery of the floor 3) - 1 metre;

vertical height of the floor 3 - 30 cm;

maximum depth of cylindrical receptacle 5 (measured vertically) - 30 cm;

minimum depth of cylindrical receptacle 5 - 18 cm;

diameter of cylindrical receptacle 5 - 40 cm;

depth of effluent collection box 13 - 15 cm;

depth of scum-collection box 18 - 10 cm;

difference in height between uppermost and lowermost edges of the top-plate 8 - 10 cm;

vertical height of the outlet cylinder 9 - 20 cm;

internal .. diameter of the outlet cylinder 9 - 60 cm;

level of the rim of the weir 9a below the top of the extension wall 10 - 5 cm;

level of the tangential inlet 34 below the top of the extension wall 10  - 65 cm;

the vertical height of the larger truncated cone 21 (measured vertically from rim to rim) - 53 cm;

diameter of the larger aperture of the truncated cone 21 (i.e. at rim 22) - 94 cm;

diameter of the smaller aperture of the truncated cone 21 (i.e. at rim 23) - 80 cm;

vertical height of the smaller truncated cone 25 (measured vertically from rim to rim) - 25 cm;

diameter of the larger aperture of the truncated cone 25 (i.e. at rim 25) - 65 cm;

diameter of the smaller aperture of the truncated cone 25 (i.e. at rim 26) - 40 cm;

projection of smaller truncated cone below rim 23 of the larger truncated cone - 10 cm;

level of lowermost rim 23 of the larger truncated cone measured vertically from the top of the extension wall 10 - 94 cm.

0168538

Example 2

Comminuted crude sewage was fed into a clarifier similar to that described in Example 1 (but constructed of clear PVC) at a feed rate corresponding to a surface or hydraulic loading of 1 litre/second/metre$^2$. The sewage feed was dosed with a flocculating agent (a composition as described in GB 2,127,395A) before entry into the clarifier. After a period of operation of at least one hour, several samples of effluent from the effluent collection box 13 and of the feed were taken at 10-minute intervals and combined samples were analysed for suspended solids content and were examined for turbidity (the latter being expressed in nephelometric turbidity units or NTU). The results were as follows:

| Influent Sewage | | Effluent from Top of Unit | |
|---|---|---|---|
| Suspended Solids | Turbidity | Suspended Solids | Turbidity |
| mg/l | NTU | mg/l | NTU |
| 305 | 249 | 108 | 100 |

The solids removal efficiency of the unit was calculated as follows:

$$\frac{305 - 108}{305} \quad x \quad 100\% \quad = \quad 64.6\%;$$

Comparative Example 1

A clarifier was constructed as described in Example 2, except that the truncated cones 21 and 25 and their supporting structure were omitted. The apparatus was tested using comminuted crude sewage in the manner described in Example 2. The results were as follows:

| Influent Sewage | | Effluent from Top of Unit | |
|---|---|---|---|
| Suspended Solids | Turbidity | Suspended Solids | Turbidity |
| mg/l | NTU | mg/l | NTU |
| 171 | 126 | 176 | 120 |

The solids removal efficiency of the unit was calculated as follows:

$$\frac{171 - 176}{171} \quad x \quad 100\% \quad = \quad -2.9\%$$

The negative result for the solids removal efficiency was due to the presence of flocculant in the effluent passing through the outlet cylinder, owing partly to short-circuiting from the feed pipe to the outlet pipe and to poor flow development.

Example 3

An effluent from a ceramics works was fed through a clarifier similar to that described in Example 1 over a period of time at a flow rate of from 0.6 to 1.0 litre/second. The works effluent, which was in essence a waste clay slip, was dosed with the flocculating agent "Clarifloc" (Registered Trade Mark), from Blue Circle Industries PLC, at a rate of 400 milligrams/litre.

The works effluent fed into the clarifier was sampled at the start of the test run and again after 25 minutes, 60 minutes, 2 hours and 3 hours. Each sample was tested for pH and for the concentration of the suspended solids in parts per million (ppm). The effluent removed from the top of the clarifier was sampled after 2 hours and after 3 hours. The results are given in the following table.

Table 1

| Time (Minutes) | Works pH | Effluent Suspended Solids (ppm) | Clarifier pH | Effluent Suspended Solids (ppm) |
|---|---|---|---|---|
| 0 | 8.1 | 5050 | - | - |
| 25 | 8.0 | 2840 | - | - |
| 60 | 8.1 | 2580 | - | - |
| 120 | 8.1 | 1830 | 11.5 | 110 |
| 180 | 8.1 | 3960 | 11.5 | 61 |

The sludge withdrawn from the bottom outlet was sampled after 2 hours (sample 1) and again after 3 hours (sample 2). The characteristics of the sludge are given in the following Table. The capillary suction time is a standard test measurement which indicates the ease with which the sludge may be filtered.

Table 2

|                                     | Sample 1 | Sample 2 |
| ----------------------------------- | -------- | -------- |
| Solids Content (Percent m/m)        | 36.3     | 37.5     |
| pH                                  | 8.4      | 8.3      |
| Capillary Suction Time (Seconds)    | 113      | 123      |

It will of course be understood that the present invention has been described above purely by way of example, and modifications of detail can be made within the scope and spirit of the invention.

Claims

1. A clarifier comprising a chamber having an inlet, a first outlet and a second outlet that is spaced from the first outlet in the general direction of the central axis of the chamber, a flow pattern-controlling device being provided within the chamber, characterised in that the said flow pattern-controlling device has a passage therethrough that is substantially aligned with the central axis of the chamber, the flow pattern-controlling device further having an outer surface that defines, together with part of the wall of the chamber, an annular space communicating both with the said passage through the flow pattern-controlling device and with the first outlet, the said inlet being arranged to direct influent material into the said annular space.

2. A clarifier according to claim 1, characterised in that the radial distance between the said outer surface of the said flow pattern-controlling device and the said part of the wall of the chamber increases in the direction toward the said first outlet.

3. A clarifier according to claim 1, characterised in that the radial distance between the said outer surface of the said flow pattern-controlling device and the said part of the wall of the chamber remains substantially constant in the direction toward the said first outlet.

4. A clarifier according to claim 1, 2 or 3, characterised in that the said flow pattern-controlling device is in the form of a hollow, truncated cone.

5. A clarifier according to claim 1, 2 or 3, characterised in that the said flow pattern-controlling device is in the form of a hollow, right cylinder.

6. A clarifier according to any one of claims 1 to 5, characterised in that a flow pattern-modifying device is provided, at least part of which is within the said passage through the flow pattern-controlling device.

7. A clarifier according to claim 6, characterised in that the said flow pattern-modifying device projects beyond the said passage in the axial direction towards the said first outlet.

8. A clarifier according to claim 6 or 7, characterised in that the said flow pattern-modifying device is in the form of a hollow, truncated cone tapering in the axial direction towards the said first outlet.

9. A clarifier according to any one of claims 1 to 5, characterised in that the said flow pattern-controlling device is provided with an extension in the form of a hollow truncated cone tapering in the axial direction towards the said first outlet.

10. A clarifier according to any one of claims 1 to 9, characterised in that a plurality of inlets are arranged to direct influent material into the said annular space.

11. A clarifier according to any one of claims 1 to 10, characterised in that the or each said inlet is arranged to direct influent material substantially tangentially into the chamber.

12. A clarifier according to any one of claims 1 to 11, characterised in that the or each said inlet is located in that part of the chamber wall that defines, with the flow pattern-controlling device, the said annular space.

13. A clarifier according to any one of claims 1 to 12, characterised in that one end of the chamber is substantially funnel-shaped and terminates in a receptacle in which the said first outlet is located.

14. A clarifier according to any one of claims 1 to 13, characterised in that the chamber is arranged with its central axis substantially vertical, the said first outlet being situated lower than the said second outlet.

15. A clarifier according to claim 14, characterised in that the first outlet is situated at the bottom end of the chamber and the second outlet is situated at the upper end of the chamber.

16. A clarifier according to claim 15, characterised in that the upper end of the chamber comprises a sloping plate having a vertical cylinder therein defining an outlet aperture, a trough being provided for the reception of liquid that may flow over the upper rim of said cylinder, the under-surface of the plate leading, at its uppermost end, to an outlet for floatable solids.

17. A clarifier substantially as hereinbefore described and as illustrated in Figures 1 to 5 or in Figure 6, 7 or 8 of the accompanying drawings.

18. A process for the clarification of a liquid by the removal of solid particulate matter, characterised in that the removal is effected by passing a continuous stream of the liquid into a clarifier according to any one of claims 1 to 17 through the inlet thereof, particulate matter being discharged from the clarifier at the said first outlet thereof and the clarified liquid being discharged at the said second outlet.

19. A process according to claim 18, characterised in that conditions are established within the clarifier for the formation and maintenance of a floc blanket.

20. A process according to claim 19, characterised in that the floc blanket is formed and maintained within the said passage of the flow pattern-controlling device.

21. A process according to claim 18, 19 or 20, characterised in that at least one flocculant is continuously introduced into the clarifier.

22. A clarified liquid or solid particulate matter whenever obtained by a process according to any one of claims 18 to 21.

FIG. 1

8

10

11

9a

14    13

FIG. 2

8

9a

11    16

17

15

9a

11

16    18    20

10

FIG. 3

9a

8

FIG. 4

FIG. 5

FIG. 6

FIG. 7

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-A- 596 099 (KRONENBERGER)<br><br>* Whole document * <br>--- | 1,3,5,<br>9,11-<br>15,17,<br>18,22 | B 01 D 21/02<br>C 02 F 1/00 |
| X | DE-C- 208 736 (F. TIEMANN)<br><br>* Page 1, line 49 - page 2, line 15; figure 1 *<br>--- | 1,4,12<br>,14,15<br>,17-20<br>,22 | |
| X | FR-A-1 171 761 (CELLECO)<br><br>* Whole document *<br>--- | 1,3,5,<br>10-12,<br>14,15,<br>17,18,<br>22 | TECHNICAL FIELDS SEARCHED (Int. Cl.4) |
| X | US-A-1 682 256 (H.G. SCHWARZ)<br><br>* Column 1, line 65 - column 2, line 15, lines 57-120; figures *<br>---     -/- | 1,2,4,<br>9,10,<br>12-15,<br>17-20,<br>22 | C 02 F<br>B 01 D |

The present search report has been drawn up for all claims

| Place of search | Date of completion of the search | Examiner |
|---|---|---|
| THE HAGUE | 19-03-1985 | VAN BELLEGHEM W.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

**European Patent Office**

**EUROPEAN SEARCH REPORT**

| DOCUMENTS CONSIDERED TO BE RELEVANT | | | Page 2 | |
|---|---|---|---|---|
| Category | Citation of document with indication, where appropriate, of relevant passages | Relevant to claim | CLASSIFICATION OF THE APPLICATION (Int. Cl.4) | |
| A | US-A-3 965 013  (G.F. JACKSON)<br><br>* Abstract * | 1,2,4,<br>11,12,<br>14,15,<br>17,18,<br>22 | | |
| A | FR-A-1 294 011  (T. VALE) | 21 | | |
| A | FR-A- 386 187  (M. HOFFMANN)<br>* Figure * | 6 | | |
| A | DE-A-2 603 426  (W. STRATE)<br>* Figures * | 6 | | |
| A | US-A-2 407 947  (A. BUTCHER)<br>* Figure 1 * | 6 | TECHNICAL FIELDS<br>SEARCHED (Int. Cl.4) | |
| A | US-A-2 747 741  (E.W. JACOBSON) | | | |
| A | FR-A-1 115 888  (H. WUNNENBERG) | | | |
| A | GB-A- 495 694  (R. HADDAN) | | | |
| A | BE-A- 378 723  (DEUTSCHE ABWASSER-REINIGUNGS-GmbH) | | | |

The present search report has been drawn up for all claims

| Place of search | Date of completion of the search | Examiner |
|---|---|---|
| THE HAGUE | 19-03-1985 | VAN BELLEGHEM W.R. |